# EUROPEAN PATENT APPLICATION

(11) **EP 2 523 069 A2**
(43) Date of publication of application: **14.11.2012**
(21) Application number: 12163589.0
(22) Date of filing: 10.04.2012
(51) Int. Cl.: G06F 3/01, G06F 3/038

(54) **Systems and methods for providing feedback by tracking user gaze and gestures**

(30) Priority: 08.04.2011 US 201113083349
(71) Applicant: Sony Computer Entertainment Inc., Tokyo 108-0075 (JP)
(72) Inventor: Larsen, Eric J., Foster City, CA California 94404 (US)
(74) Representative: Turner, James Arthur

(57) **Abstract**

User interface technology that provides feedback to the user based on the user's gaze and a secondary user input, such as a hand gesture, is provided. A camera-based tracking system may track the gaze direction of a user to detect which object displayed in the user interface is being viewed. The tracking system also recognizes hand or other body gestures to control the action or motion of that object, using, for example, a separate camera and/or sensor. The user interface is then updated based on the tracked gaze and gesture data to provide the feedback.

## Description

### BACKGROUND

### 1. Field

The subject invention relates to providing feedback based on a user's interaction with a user interface generated by a computer system based on multiple user inputs, such as, for example, tracked user gaze and tracked user gestures.

### 2. Related Art

The capabilities of portable or home video game consoles, portable or desktop personal computers, set-top boxes, audio or video consumer devices, personal digital assistants, mobile telephones, media servers, and personal audio and/or video players and records, and other types are increasing. The devices have enormous information processing capabilities, high quality audio and video inputs and outputs, large amounts of memory, and may also include wired and/or wireless networking capabilities.

These computing devices typically require a separate control device, such as a mouse or game controller, to interact with the computing device's user interface. Users typically use a cursor or other selection tool displayed in the user interface to select objects by pushing buttons on the control device. Users also use the control device to modify and control those selected objects (e.g., by pressing additional buttons on the control device or moving the control device). Training is usually required to teach the user how movements of this control device map to the remote user interface objects. Even after the training, the user sometimes still finds the movements to be awkward.

Recently, the KINECT device sold by MICROSOFT was introduced, which allows users to control and interact with a computer game console without the need to use a game controller. The user interacts with the user interface using gestures and spoken commands via the KINECT device. Specifically, the KINECT device includes a video camera, a depth sensor and a microphone to track the user's gestures and spoken commands. The video camera and depth sensor are used together to create a 3-D model of the user. The KINECT device however only recognizes limited types of gestures (users can point to control a cursor but the KINECT device doesn't allow a user to click the cursor requiring the user to hover over a selection for several seconds to make a selection).

### SUMMARY

The following summary of the invention is included in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

According to an aspect of the invention, a computer system is disclosed that includes a processor configured to receive gaze data, receive gesture data, determine a location of a user interface corresponding to the gaze data and correlate the gesture data to a modification of the user interface; and memory coupled to the processor and configured to store the gaze data and gesture data.

The gesture data may be hand gesture data.

The gaze data may include a plurality of images of an eye of a user interacting the user interface. The gaze data may include reflections of light. The light may be infrared illumination.

The gesture data may include a plurality of images of the body of a user interacting with the user interface. The gesture data may also include depth information.

According to a further aspect of the invention, a system is disclosed that includes a display to display a user interface that includes an object; a gaze sensor to capture eye gaze data; a gesture sensor to capture user gesture data; and a computing device coupled to the gaze sensor, the gesture sensor and the display, wherein the computing device is configured to provide the user interface to the display, determine if the user is viewing the object based on the gaze data, correlate the gesture data to a command corresponding to the object, and modify the display of the user interface that includes the object based on the command.

The command may be a movement of the object.

The gaze data may include eye gaze data eye gaze position and at least one of eye position, distance from the gaze sensor to the eye, pupil size, and a timestamp.

The gaze sensor may include a video camera and a light source. The gesture sensor may include a video camera and a depth sensor. The gesture sensor may include at least one gyroscope and at least one accelerometer.

According to another aspect of the invention, a method is disclosed that includes displaying a user interface on a display; receiving gaze data for a user interacting with the user interface; determining whether the gaze of the user is directed at an object displayed in the user interface based on the gaze data; receiving gesture data corresponding to a gesture of the user; correlating the gesture data to an intended interaction of the user with the object; and modifying the display of the object in the user interface based on the correlated interaction.

The gaze data may include eye gaze data eye gaze position and at least one of eye position, distance from the gaze sensor to the eye, pupil size, and a timestamp.

The gesture data may be correlated to an intended interaction of the user before determining whether the gaze of the user is directed at the object.

Modifying the display of the object may include moving the relative position of the object in the user interface.

The gesture data may include information corresponding to a hand gesture.

According to yet another aspect of the invention, a computer-readable storage media is disclosed having computer executable instructions stored thereon which cause a computer system to carry out the above method when executed.

### BRIEF DESCRIPTION OF THE DRAWINGS

The accompanying drawings, which are incorporated in and constitute a part of this specification, exemplify the embodiments of the present invention and, together with the description, serve to explain and illustrate principles of the invention. The drawings are intended to illustrate major features of the exemplary embodiments in a diagrammatic manner. The drawings are not intended to depict every feature of actual embodiments nor relative dimensions of the depicted elements, and are not drawn to scale.

Figure 1 is a schematic diagram illustrating providing user feedback based on gaze and hand gesture tracking according to one embodiment of the invention;

Figure 2 is a block diagram illustrating a system for providing user feedback based on gaze and hand gesture tracking according to one embodiment of the invention;

Figure 3 is a flow diagram illustrating a process for providing user feedback based on gaze and hand gesture tracking according to one embodiment of the invention;

Figure 4 is a block diagram illustrating a system for providing user feedback based on tracking a primary user input and a secondary user input according to one embodiment of the invention;

Figure 5 is a flow diagram illustrating a process for providing user feedback based on tracking a primary user input and a secondary user input according to one embodiment of the invention;

Figure 6 is a block diagram illustrating an exemplary computing device according to one embodiment of the invention; and

Figure 7 is a block diagram illustrating additional hardware that may be used to process instructions according to one embodiment of the invention.

### DETAILED DESCRIPTION

Embodiments of the invention relate to user interface technology that provides feedback to the user based on the user's gaze and a secondary user input, such as a hand gesture. In one embodiment, a camera-based tracking system tracks the gaze direction of a user to detect which object displayed in the user interface is being viewed. The tracking system also recognizes hand or other body gestures to control the action or motion of that object, using, for example, a separate camera and/or sensor. Exemplary gesture input can be used to simulate a mental or magical force that can pull, push, position or otherwise move or control the selected object. The user's interaction simulates a feeling in the user that their mind is controlling the object in the user interface - similar to telekinetic power, which users have seen simulated in movies (e.g., the Force in Star Wars).

In the following description, numerous details are set forth. It will be apparent, however, to one skilled in the art, that embodiments of the invention may be practiced without these specific details. In some instances, well-known structures and devices are shown in block diagram form, rather than in detail, in able to avoid obscuring embodiments of the invention.

Some portions of the detailed description which follows are presented in terms of algorithms and symbolic representations of operations on data bits within a computer memory. These algorithmic descriptions and representations are the means used by those skilled in the data processing arts to most effectively convey the substance of their work to others skilled in the art. An algorithm, as disclosed herein and generally, is conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing", "computing", "converting", "determining", "correlating" or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage devices.

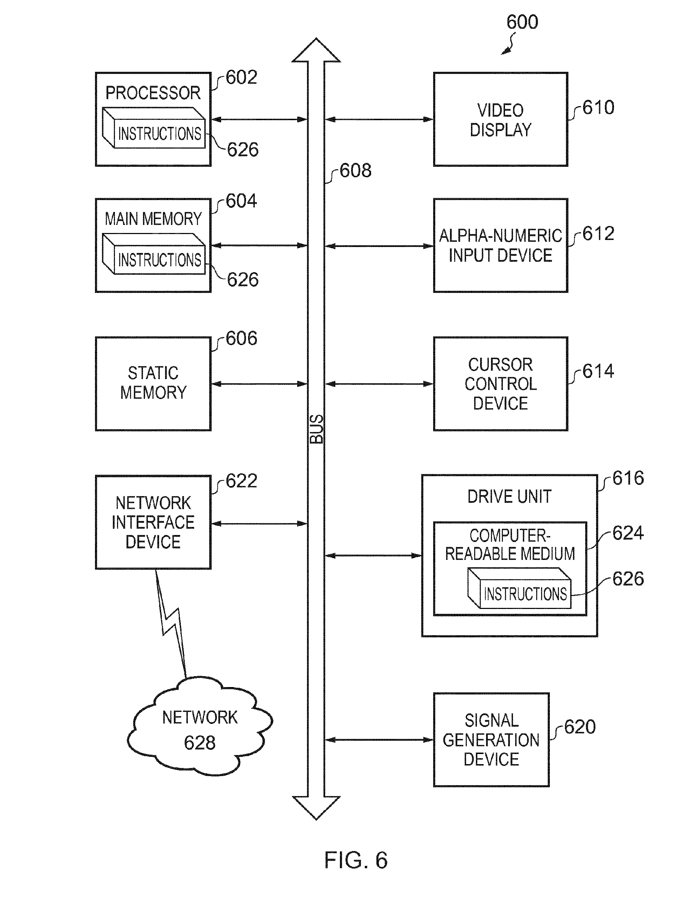

Embodiments of the present invention also relate to an apparatus or system for performing the operations herein. This apparatus or system may be specifically constructed for the required purposes, or it may comprise a general purpose computer selectively activated or reconfigured by a computer program stored in the computer. In one embodiment, the apparatus or system performing the operations described herein is a game console (e.g., a SONY PLAYSTATION, a NINTENDO WII, a MICROSOFT XBOX, etc.). A computer program may be stored in a computer readable storage medium, which is described in further detail with reference to Figure 6.

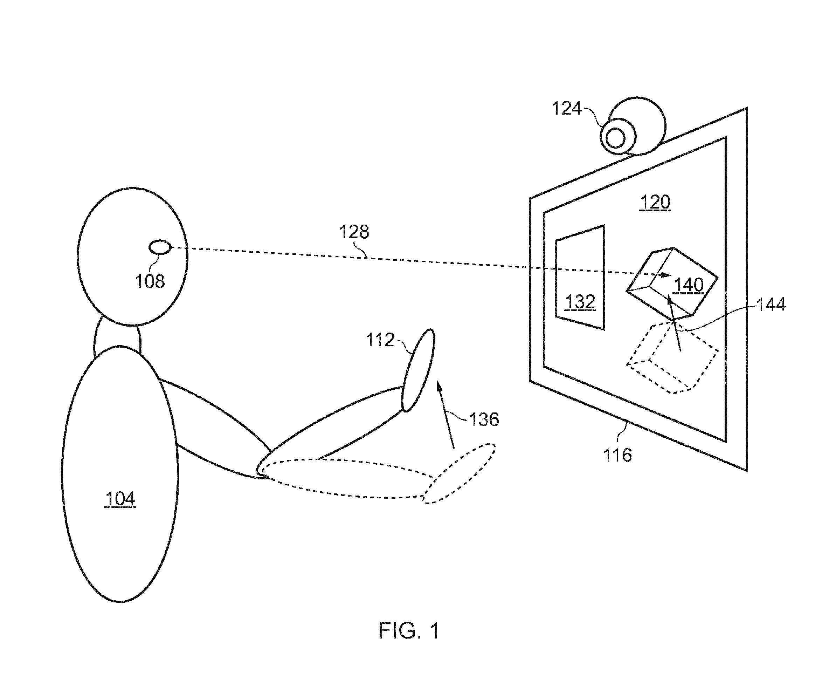

Figure 1 schematically illustrates user interface technology that provides feedback based on gaze tracking and gesture input according to one embodiment of the invention. In Figure 1, the user 104 is schematically illustrated with the user's eye 108 and hand 112. The user 104 views a display 116 which displays a user interface 120 (e.g., a video game, an Internet browser window, word processing application window, etc.). The display 116 includes a computing device or is coupled to a computing device, such as a video game console or computer. In yet another embodiment, the display 116 may be wired or wirelessly connected over the Internet to a computing device such as a server or other computer system. The computing device provides the user interface 120 to the display 116.

In Figure 1, a camera 124 is shown positioned over the display 116 with the lens of the camera 124 pointed generally in the direction of the user 104. In one embodiment, the camera 124 uses infrared illumination to track the user's gaze 128 (i.e., direction at which the user's eye 108 is directed relative to the display 116). The computing device analyzes the input from the at least one camera with infrared illumination to determine the area of the display 132 where the user is looking, and then determines the specific object 140 that the user is looking at. Alternatively, the camera 124 may include a processor that determines the user's gaze 128.

The same camera 124 or separate camera (not shown in Figure 1) may be used to track hand gestures (i.e., movements made by the user's hand 112 in the direction of arrow 136). In embodiments in which a separate camera is used, the camera alone may be used, a camera in combination with a near-infrared sensor, or a camera in combination with another depth sensor may be used to track hand gestures. It will be appreciated that a controller or inertial sensor may alternatively be used to track the user's hand gestures. For example, the hand gesture may be a flick of an inertial sensor (or other controller or sensor that includes an accelerometer). The computing device then correlates the input from the gesture camera (or other gesture tracking device) to a movement of the object 144 or a command relating to the object 144 displayed in the user interface 120 (i.e., movement of the object 140 in the direction of arrow 144). Alternatively, the gesture sensor may include a processor that determines the user's gesture.

In use, the eye gaze is used to select the object 140 displayed in the user interface, and the hand gesture or body movement 136 is used to control or move the object 144. It will be appreciated that these steps may order in any order (i.e., control or movement 144 may be determined before the object is selected or vice versa).

It will be appreciated that there are many different applications for user interface technology that provides user feedback based on the combination of eye gaze tracking and hand gesture tracking. For example, the hand gesture may launch a spell at a character on the user interface based on the character that the user is looking at. Another exemplary hand gesture may be a trigger (e.g. shooting action) in a shooting game. The gaze and gestures may also be used to select virtual buttons by simulating the action of pressing a button (e.g., pointing a finger and moving the finger forward while the user's gaze is focused on the button). In another example, the gaze and user gesture may be used to zoom in or out of a particular portion of the user interface (e.g., zoom in to a particular portion of a map). In still another example, a forward flick of a pointing hand could start an interaction with the object being watched by the user as detected by the gaze tracker. In yet another example, a beckoning gesture may be used to make the object the user is looking at move closer to the user in the user interface; similarly, a waving gesture could make the object recede.

Gaze tracking is advantageous because, to the user, it feels like a natural or even unconscious way to indicate an intent to interact with an object displayed in the user interface. Hand gestures are advantageous because the power of hand movement can be used to affect the power of the action on the screen, and hand gestures are a natural to way to interact with the selected objects to communicate a desired motion or to directly control motion.

Although the invention has been described with reference to Figure 1 as tracking hand gestures, it will be appreciated that other user gestures, such as foot gestures (i.e., movement of the user's foot) or facial gestures (i.e., movement of the user's head or movement of certain features of the user's face) may be used to interact with the user interface. For example, a foot gesture, such as swinging the user's foot, may be used to simulate kicking a ball in a video soccer game. In particular, a user may simulate a shot on goal (similar to a shot on goal in a real soccer game) by changing their gaze just prior to kicking the ball to trick the goalie - the ball is kicked in the direction of the user's gaze - and (hopefully) score a goal.

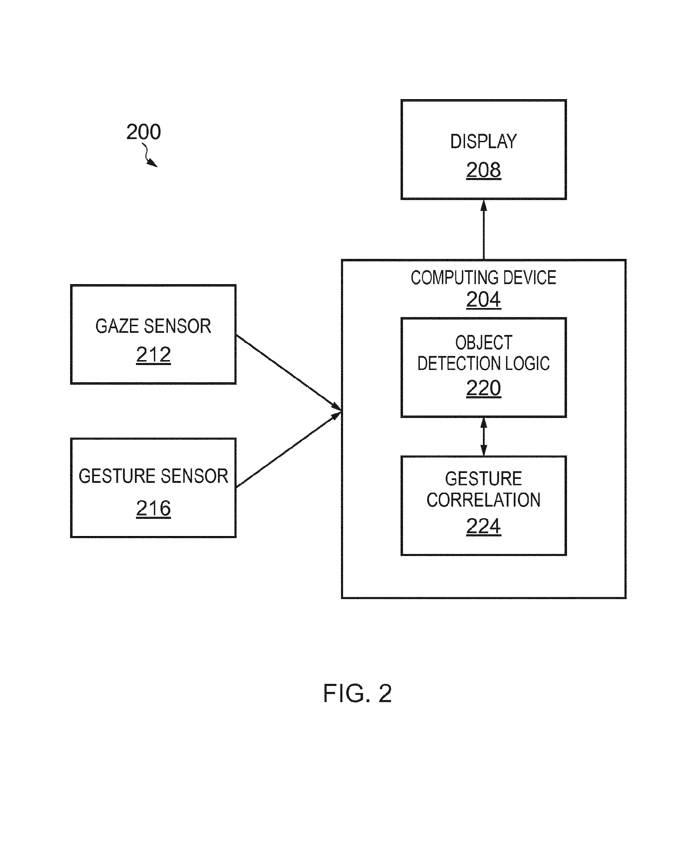

Figure 2 illustrates a system 200 for providing user feedback based on gaze and gesture tracking according to one embodiment of the invention. The system 200 includes a computing device 204 coupled to a display 208. The system 200 also includes a gaze sensor 212 and a gesture sensor 216 coupled to the computing device 204. The computing device 204 processes data received by the gaze sensor 212 and the gesture sensor 216.

The gaze sensor 212 tracks the user's eye. The gaze sensor 212 may include a light source, such as near infrared illumination diodes, to illuminate the eye, and, in particular, the retina, causing visible reflections and a camera that captures an image of the eye showing the reflections. The image is then analyzed by the computing device 204 to identify the reflection of the light, and calculate the gaze direction. Alternatively, the gaze sensor 212 itself may analyze the data to calculate the gaze direction.

In one embodiment, the gaze sensor 212 is the camera and light source and is positioned near the display, such as the TOBII X60 and X120 eye trackers. In another embodiment, the gaze sensor 212 is integrated into the display 208 (i.e., the camera and light source are included in the display housing), such as the TOBII T60, T120 or T60 XL eye trackers. In yet another embodiment, the gaze sensor 212 are glasses worn by the user that include the camera and light source, such as the TOBII GLASSES eye tracker. It will be appreciated that these are merely exemplary and other sensors and devices for tracking gaze may be used. In addition, it will be appreciated that multiple cameras and light sources may be used to determine the user's gaze.

The gesture sensor 216 may be an optical sensor to track a movement of a user interacting with an object displayed in the display 208. The gesture sensor 216 is also positioned near the display 208 (e.g., on top of the display, below the display, etc.). In one embodiment, the same sensor is used to record images for gaze tracking and gesture tracking. The gesture sensor 216 may be used to monitor the user's body, such as the user's hand, foot, arm, leg, face, etc.).

The gesture sensor 216 measures the positions of an object (i.e., the user) in two-dimensional or three-dimensional space relative to the sensor. Positional data (e.g., images) taken by the sensor 216 may be in a reference frame that are defined by an image plane and a vector normal to the image plane. A reference frame is a coordinate system in which an object's position, orientation and/or other properties may be measured.

The gesture sensor 216 may be a standard or 3-D video camera. The gesture sensor 216 may capture depth information (e.g., distance between the sensor and the user) directly or indirectly. Pre-configured information may be required to determine the depth information when a standard video camera. Alternatively, a separate sensor may be used to determine the depth information. It will be appreciated that multiple cameras and/or depth may be used to determine the user's gestures. In one particular embodiment, the gesture sensor 216 is the KINECT device or is similar to the KINECT device.

In an alternative embodiment, the gesture sensor 216 may be used to monitor a controller or inertial sensor held by, or otherwise connected to, the user. The inertial sensor may include one or more gyroscopes and one or more accelerometers to detect changes in orientation (e.g., pitch, roll and twist) and acceleration(s) that are used to calculate gestures.

The sensors 212, 216 may be connected with the computing device 204 through wired and/or wireless connections. Exemplary wired connections include connections made via an IEEE 1394 (firewire) cable, an Ethernet cable, a universal serial bus (USB) cable, etc. Exemplary wireless connections include wireless fidelity (WIFI) connections, BLUETOOTH connections, ZIGBEE connections, and the like.

The sensors 212, 216 provide the data to the computing device 204 continuously and in real-time. It will be appreciated that the sensors 212, 216 may provide additional information such as timestamp data and the like that can also be used during an analysis of the data. Exemplary output data of the gaze sensor 212 includes eye gaze position, eye position, distance from sensor 212 to eye, pupil size, timestamp for each data point and the like. Alternatively, the gaze sensor 212 simply provides the captured image data (e.g., the video feed that includes the near-infrared illumination reflections). Exemplary output of the gesture sensor 216 includes relevant joint positions, body positions, distance from sensor 216 to user, time stamp for each data point and the like. Alternatively, the gaze sensor 216 simply provides the captured image data and/or captured depth sensor data.

The computing device 204 may be a gaming system (e.g., a game console), a personal computer, a game kiosk, a television that includes a computer processor, or other computing system. The computing device 204 may execute programs corresponding to games or other applications that can cause the computing device 204 to display a user interface that includes at least one object on the display 208. The computing device 204 also executes programs that determine a user's response to the user interface using data received from the sensors 212, 216 and responds to the user input (e.g., by changing the user interface displayed on the display 208) based on the received data. The computing device 204 may include memory to store the data received from the sensors 212, 216.

In one embodiment, the computing device 204 includes object detection logic 220 and gesture correlation logic 224. In one embodiment, a ray cast analysis is performed by the object detection logic 220 to determine the gaze position on the screen. In particular, a 3-D ray intersection analysis may be performed. It will be appreciated that other algorithms may be used to calculate the object that the user is looking at. In one embodiment, the dwell time (i.e., the amount of time the user is gazing at a particular object) is used to select an object. In other words, the user must be gazing at the object displayed in the user interface for a predetermined amount of time before the object is selected. For example, the user must look at the object for at least three seconds before the object is selected. It will be appreciated that the dwell time may be any time or range of times between about 100 milli-seconds and about 30 seconds.

In one embodiment, the gesture correlation logic 224 identifies the user gesture or calculates the user gesture (e.g., by comparing the user's position in captured images at different points in time or detecting changes in the user's position). In some embodiments, the user gesture data will be provided to the gesture correlation logic 224. The gesture correlation logic 224 then correlates the user gesture to a change in the user interface (i.e., movement of the object displayed in the user interface). The user's body may mapped to a skeletal model. An amount and direction of an axial rotation of a particular joint may be used to determine a corresponding amount and direction of an axial rotation of a model of a character (i.e., selected object) displayed in the user interface. For example, the gesture data may be rasterized and projected onto the object or user interface based on the gaze data. In one embodiment, force vectors for each pixel of the object are calculated based on the gesture data. In other words, pixel-level information in the camera image (e.g., motion of pixels) may be captured and then that pixel-level data may be used to move an object in the display. In one embodiment, a look-up table stored in memory of the computing device 204 may be used to correlate gestures to commands (e.g., moving hand up and down moves the object up and down in a video game, moving hand up and down scrolls a web page up and down in an Internet browser application, etc.).

In one embodiment, the computing device 204 is calibrated prior to tracking the user input received from the sensors 212, 216. For example, characteristics of the user's eyes and body may need to be measured to perform data processing algorithms. In a particular example, characteristics of the user's eye may be measured to generate a physiological eye model (e.g., including pupil size and position, cornea size, etc.), and characteristics of the user's body may be measured to generate a physiological body model (e.g., location of joints, user size, etc.).

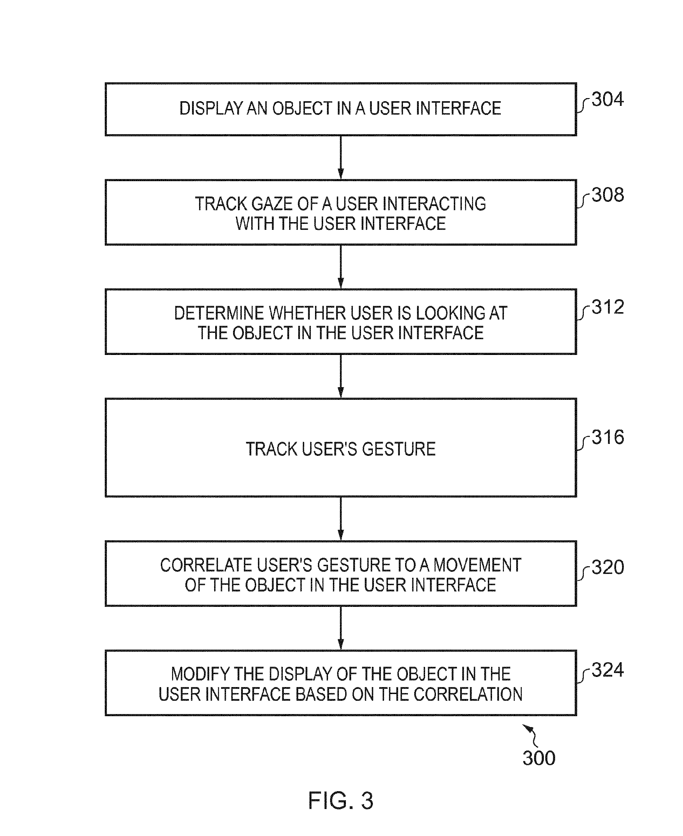

Figure 3 illustrates a process 300 for providing user feedback based on gaze and gesture tracking according to one embodiment of the invention. It will be appreciated that the process 300 described below is merely exemplary and may include a fewer or greater number of steps, and that the order of at least some of the steps may vary from that described below. In one embodiment, the process 300 is performed by the computing device 204.

The process 300 begins by displaying an object in a user interface (block 304).

The process 300 continues by tracking the gaze of a user interacting with the user interface (block 308) and determining whether the user is looking at the object in the user interface (block 312).

The process 300 continues by tracking the user's gesture (block 316) and correlating the user's gesture to a movement of the object in the user interface (block 320).

The process 300 continues by modifying the display of the object in the user interface based on the correlation (block 324).

It will be appreciated that in alternative embodiments, the user's gesture may be tracked prior to tracking the user's gaze. In yet another alternative embodiment, the user's gesture and gaze may be tracked prior to the analysis (e.g., determination of object selected and correlation of gesture to control of the object).

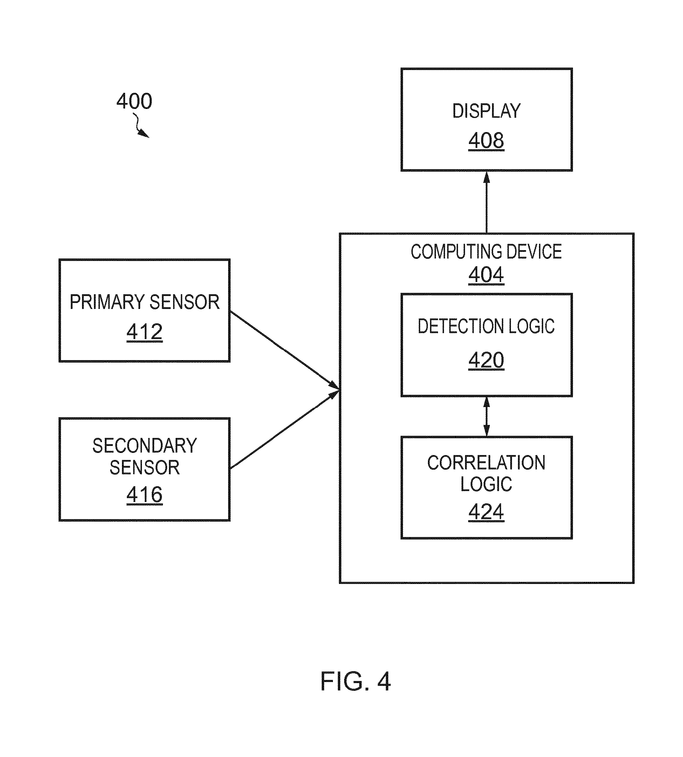

Figure 4 illustrates a system 400 for providing user feedback based on a primary user input and a secondary user input according to one embodiment of the invention. As shown in Figure 4, the system 400 includes a computing device 404 that is coupled to a display 408 and provides a user interface to be displayed on the display 408. The system 400 also includes a primary sensor 412 and a secondary sensor 416 that are coupled to the computing device 404. As described above, the primary sensor 412 and secondary sensor 416 may be coupled to the computing device 404 via wired and/or wireless connections. The computing device 404 may include detection logic 420 to determine an object in the user interface that is selected by the user and correlation logic 424 to correlate an intended action or command of the user to the user interface.

In one embodiment, the primary input is gaze, and the primary sensor 412 is a gaze tracking sensor as described above with reference to, for example, Figure 2. In one embodiment, the secondary input is gesture, and the secondary sensor 416 is a gesture sensor as described above with reference to, for example, Figure 2.

In another embodiment, the secondary input is a voice command. In this example, the secondary sensor 416 is a microphone. For example, users can gaze at the character that they want to speak with (i.e., primary input), and then interact with the character by speaking to the character (i.e., secondary input).

In general, if communication is being simulated, the secondary input is voice data; and, if motion is being simulated, the secondary input is gesture data.

In yet another embodiment, the secondary input may be brainwaves and/or user emotions. In this example, the secondary sensor 416 may be a sensor (or plurality of sensors) that measures and produces graphs of brainwaves, such as electroencephalogram (EEG). For example, several pairs of electrodes or other sensors may be provided on the user's head using a headset, such as, for example, the Emotiv EPOC headset. The headset may also be used to detect facial expressions. The brainwaves and/or facial expressions data collected may be correlated into object actions such as lifting and dropping an object, moving an object, rotating an object and the like, into emotions such as excitement, tension, boredom, immersion, mediation and frustration, and into character actions, such as winking, laughing, crossing eyes, appearing shocked, smiling, getting angry, smirking, grimacing and the like. For example, a user may gaze at an object that the user wants to move, and the user may use his brainwaves to move the object. In another example, a user may gaze at a character, and control the user's facial expressions, emotions and/or actions using the headset sensor system.

It will be appreciated that gaze tracking may be used with various combinations of gesture input, voice input, brainwave input and emotion input. For example, gaze tracking may be used with each of gesture input, voice input, brainwave input and emotion input. In another example, gaze tracking may be used with voice input, brainwave input and emotion input. In another example, gaze tracking may be used with voice input and brainwave input.

The computing device 404 is similar to the computing device 204 described above with reference to Figure 2. It will be appreciated, however, that in embodiments in which the secondary input is not gesture data (e.g., the secondary input is a voice command), the correlation logic 424 correlates the secondary input to a command or movement related to the user interface displayed in the display 408. For example, received voice data may be analyzed to determine a user command (e.g., "scroll down", "scroll up", "zoom in", "zoom out", "cast spell", etc.), and then modify the user interface based on the command (e.g., by scrolling down, scrolling up, zooming in, zooming out, casting the spell, etc.).

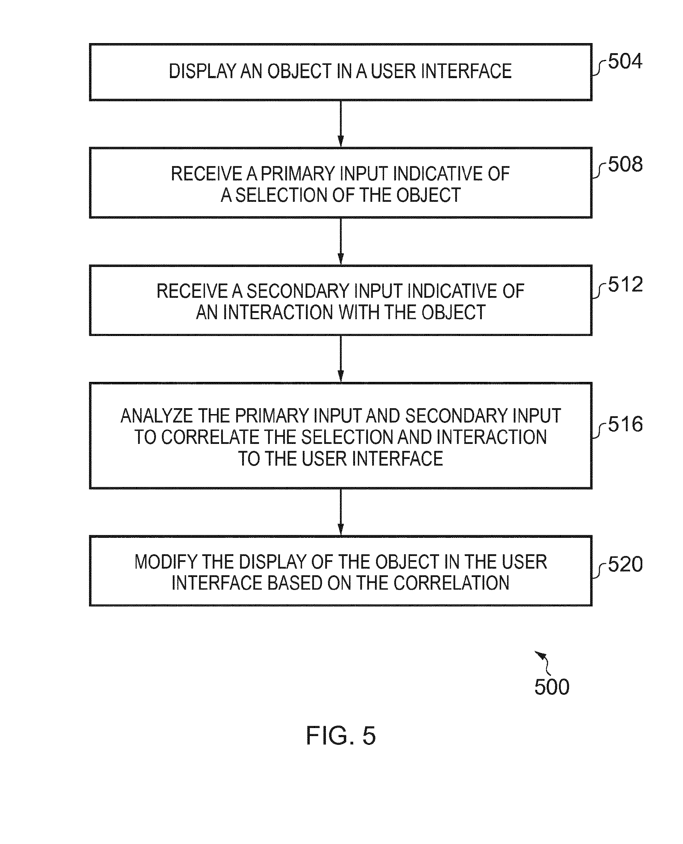

Figure 5 illustrates a process for providing user feedback based on tracking a primary user input and a secondary user input according to one embodiment of the invention. It will be appreciated that the process 500 described below is merely exemplary and may include a fewer or greater number of steps, and that the order of at least some of the steps may vary from that described below. In one embodiment, the process 300 is performed by the computing device 404.

The process 500 begins by displaying an object in a user interface (block 504).

The process 500 continues by receiving a primary input indicative of a selection of the object (block 508) and receiving a secondary input indicative of an interaction with the object (block 512).

The process 500 continues by analyzing the primary input and secondary input to correlate the selection and interaction to the user interface (block 516). The process 500 continues by modifying the display of the object in the user interface based on the correlation (block 520).

Figure 6 shows a diagrammatic representation of machine in the exemplary form of a computer system 600 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, a video console or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one particular embodiment, the computer system 600 is a SONY PLAYSTATION entertainment device.

The exemplary computer system 600 includes a processor 602 (e.g., a central processing unit (CPU), a graphics processing unit (GPU) or both), a main memory 604 (e.g., read only memory (ROM), flash memory, dynamic random access memory (DRAM) such as synchronous DRAM (SDRAM) or Rambus DRAM (RDRAM), etc.) and a static memory 606 (e.g., flash memory, static random access memory (SRAM), etc.), which communicate with each other via a bus 608. In one particular embodiment, the processor 602 is a Cell processor, and the memory may include a RAMBUS dynamic random access memory (XDRAM) unit.

The computer system 600 may further include a video display unit 610 (e.g., a liquid crystal display (LCD) or a cathode ray tube (CRT)). Alternatively, the computer system 600 may be connected to a separate video display unit 610. The computer system 600 also includes an alphanumeric input device 612 (e.g., a keyboard), a cursor control device 614 (e.g., a mouse or game controller and/or gaze and gesture sensors, etc.), a disk drive unit 616, a signal generation device 620 (e.g., a speaker, the gaze and gesture sensors, etc.) and a network interface device 622. In one particular embodiment, the computer system 616 includes a BLU-RAY DISK BD-ROM optical disk reader for reading from a disk and a removable slot-in hard disk drive (HDD) accessible through the bus 608. The bus may also connect to one or more Universal Serial Bus (USB) 2.0 ports, a gigabit Ethernet port, an IEEE 802.11b/g wireless network (WiFi) port, and/or a BLUETOOTH wireless link port.

The disk drive unit 616 includes a computer-readable medium 624 on which is stored one or more sets of instructions (e.g., software 626) embodying any one or more of the methodologies or functions described herein. The software 626 may also reside, completely or at least partially, within the main memory 604 and/or within the processor 602 during execution thereof by the computer system 600, the main memory 604 and the processor 602 also constituting computer-readable media. The software 626 may further be transmitted or received over a network 628 via the network interface device 622.

While the computer-readable medium 624 is shown in an exemplary embodiment to be a single medium, the term "computer-readable medium" should be taken to include a single medium or multiple media (e.g., a centralized or distributed database, and/or associated caches and servers) that store the one or more sets of instructions. The term "computer-readable medium" shall also be taken to include any tangible medium that is capable of storing, encoding or carrying a set of instructions for execution by the machine and that cause the machine to perform any one or more of the methodologies of the present invention. The term "computer-readable storage medium" shall accordingly be taken to include, but not be limited to, solid-state memories, and optical and magnetic media.

It should be noted that the computing device is illustrated and discussed herein as having various modules which perform particular functions and interact with one another. It should be understood that these modules are merely segregated based on their function for the sake of description and represent computer hardware and/or executable software code which is stored on a computer-readable medium for execution on appropriate computing hardware. The various functions of the different modules and units can be combined or segregated as hardware and/or software stored on a computer-readable medium as above as modules in any manner, and can be used separately or in combination.

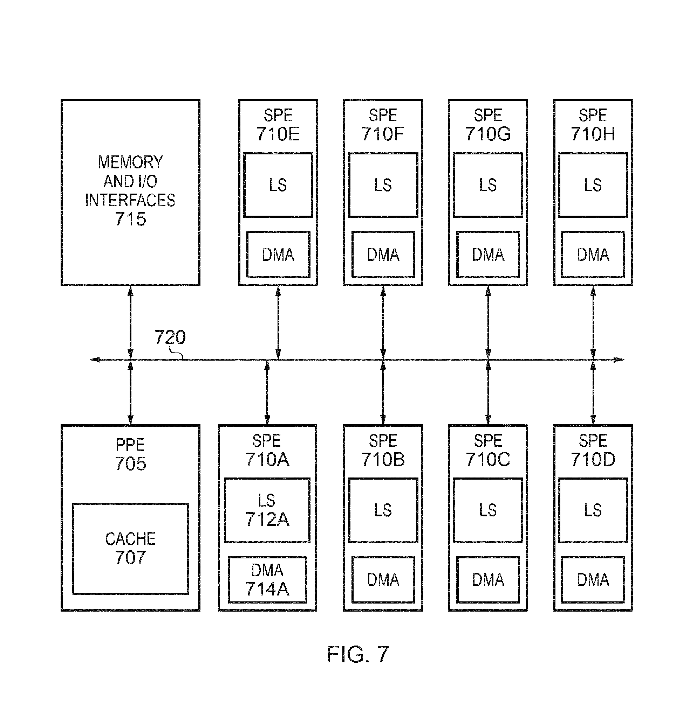

Figure 7 illustrates additional hardware that may be used to process instructions, in accordance with one embodiment of the present invention. Figure 7 illustrates the components of a cell processor 700, which may correspond to the processor 602 of Figure 6, in accordance with one embodiment of the present invention. The cell processor 700 of Figure 7 has an architecture comprising four basic components: external input and output structures comprising a memory controller 760 and a dual bus interface controller 770A, B; a main processor referred to as the Power Processing Element 750; eight co-processors referred to as Synergistic Processing Elements (SPEs) 710A-H; and a circular data bus connecting the above components referred to as the Element Interconnect Bus 780. The total floating point performance of the Cell processor is 218 GFLOPS, compared with the 6.2 GFLOPs of the Playstation 2 device's Emotion Engine.

The Power Processing Element (PPE) 750 is based upon a two-way simultaneous multithreading Power 1470 compliant PowerPC core (PPU) 755 running with an internal clock of 3.2 GHz. It comprises a 512 kB level 2 (L2) cache and a 32 kB level 1 (L1) cache. The PPE 750 is capable of eight single position operations per clock cycle, translating to 25.6 GFLOPs at 3.2 GHz. The primary role of the PPE 750 is to act as a controller for the Synergistic Processing Elements 710A-H, which handle most of the computational workload. In operation the PPE 750 maintains a job queue, scheduling jobs for the Synergistic Processing Elements 710A-H and monitoring their progress. Consequently each Synergistic Processing Element 710A-H runs a kernel whose role is to fetch a job, execute it and synchronize it with the PPE 750.

Each Synergistic Processing Element (SPE) 710A-H comprises a respective Synergistic Processing Unit (SPU) 720A-H, and a respective Memory Flow Controller (MFC) 740A-H comprising in turn a respective Dynamic Memory Access Controller (DMAC) 742A-H, a respective Memory Management Unit (MMU) 744AH and a bus interface (not shown). Each SPU 720A-H is a RISC processor clocked at 3.2 GHz and comprising 256 kB local RAM 730A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 720A-H does not directly access the system memory XDRAM 1426; the 64-bit addresses formed by the SPU 720A-H are passed to the MFC 740A-H which instructs its DMA controller 742A-H to access memory via the Element Interconnect Bus 780 and the memory controller 760.

The Element Interconnect Bus (EIB) 780 is a logically circular communication bus internal to the Cell processor 700 which connects the above processor elements, namely the PPE 750, the memory controller 760, the dual bus interface 770A,B and the 8 SPEs 710A-H, totaling 12 participants. Participants can simultaneously read and write to the bus at a rate of 8 bytes per clock cycle. As noted previously, each SPE 710A-H comprises a DMAC 742A-H for scheduling longer read or write sequences. The EIB comprises four channels, two each in clockwise and anticlockwise directions. Consequently for twelve participants, the longest step-wise dataflow between any two participants is six steps in the appropriate direction. The theoretical peak instantaneous EIB bandwidth for 12 slots is therefore 96B per clock, in the event of full utilization through arbitration between participants. This equates to a theoretical peak bandwidth of 307.2 GB/s (gigabytes per second) at a clock rate of 3.2GHz.

The memory controller 760 comprises an XDRAM interface 762, developed by Rambus Incorporated. The memory controller interfaces with the Rambus XDRAM with a theoretical peak bandwidth of 25.6 GB/s.

The dual bus interface 770A,B comprises a Rambus FlexIO® system interface 772A,B. The interface is organized into 12 channels each being 8 bits wide, with five paths being inbound and seven outbound. This provides a theoretical peak bandwidth of 62.4 GB/s (36.4 GB/s outbound, 26 GB/s inbound) between the Cell processor and an I/O Bridge via controller 770A and a Reality Simulator graphics unit via controller 770B.

It should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. The computer devices can be PCs, handsets, servers, PDAs or any other device or combination of devices which can carry out the disclosed functions in response to computer readable instructions recorded on media. The phrase "computer system", as used herein, therefore refers to any such device or combination of such devices.

Moreover, other implementations of the invention will be apparent to those skilled in the art from consideration of the specification and practice of the invention disclosed herein. Various aspects and/or components of the described embodiments may be used singly or in any combination. It is intended that the specification and examples be considered as exemplary only, with a true scope and spirit of the invention being indicated by the following claims.

## Claims

1. A computer system comprising:
a processor configured to receive gaze data, receive gesture data, determine a location of a user interface corresponding to the gaze data and correlate the gesture data to a modification of the user interface; and
memory coupled to the processor and configured to store the gaze data and gesture data.

2. The computer system of claim 1, wherein the gesture data comprises hand gesture data.

3. The computer system of claim 1, wherein the gaze data comprises a plurality of images of an eye of a user interacting the user interface.

4. The computer system of claim 3, wherein the gaze data comprises reflections of light.

5. The computer system of claim 4, wherein the light comprises infrared illumination.

6. The computer system of claim 1, wherein the gesture data comprises a plurality of images of the body of a user interacting with the user interface.

7. The computer system of claim 6, wherein the gesture data further comprises depth information.

8. A system comprising:
a display to display a user interface that includes an object;
a gaze sensor to capture eye gaze data;
a gesture sensor to capture user gesture data; and
a computing device coupled to the gaze sensor, the gesture sensor and the display, wherein the computing device is configured to provide the user interface to the display, determine if the user is viewing the object based on the gaze data, correlate the gesture data to a command corresponding to the object, and modify the display of the user interface that includes the object based on the command.

9. The system of claim 8, wherein the command comprises a movement of the object.

10. The system of claim 8, wherein the gaze data comprises eye gaze data eye gaze position and at least one of eye position, distance from the gaze sensor to the eye, pupil size, and a timestamp.

11. The system of claim 8, wherein the gaze sensor comprises a video camera and a light source.

12. The system of claim 8, wherein the gesture sensor comprises a video camera and a depth sensor.

13. The system of claim 8, wherein the gesture sensor comprises at least one gyroscope and at least one accelerometer.

14. A method comprising:
displaying a user interface on a display;
receiving gaze data for a user interacting with the user interface;
determining whether the gaze of the user is directed at an object displayed in the user interface based on the gaze data;
receiving gesture data corresponding to a gesture of the user;
correlating the gesture data to an intended interaction of the user with the object; and
modifying the display of the object in the user interface based on the correlated interaction.

15. The method of claim 14, wherein the gaze data comprises eye gaze data eye gaze position and at least one of eye position, distance from the gaze sensor to the eye, pupil size, and a timestamp.

16. The method of claim 14, wherein the gesture data is correlated to an intended interaction of the user before determining whether the gaze of the user is directed at the object.

17. The method of claim 14, wherein modifying the display of the object comprises moving the relative position of the object in the user interface.

18. The method of claim 14, wherein the gesture data comprises information corresponding to a hand gesture.

19. A computer-readable storage media having computer executable instructions stored thereon which cause a computer system to carry out a method when executed, the method comprising:
displaying a user interface on a display;
receiving gaze data for a user interacting with the user interface;
determining whether the gaze of the user is directed at an object displayed in the user interface based on the gaze data;
receiving gesture data corresponding to a gesture of the user;
correlating the gesture data to an intended interaction of the user with the object; and
modifying the display of the object in the user interface based on the correlated interaction.

20. The computer-readable storage media of claim 19, wherein the gesture data is correlated to an intended interaction of the user before determining whether the gaze of the user is directed at the object.

21. The computer-readable storage media of claim 19, wherein modifying the display of the object comprises moving the relative position of the object in the user interface.

22. A computer system comprising:
a processor configured to receive gaze data, receive at least one of brainwave data and emotion data, determine a location of a user interface corresponding to the gaze data and correlate the at least one of brainwave data and emotion data to a modification of the user interface; and
memory coupled to the processor and configured to store the gaze data and at least one of brainwave data and emotion data.

23. The computer system of claim 22, wherein the gaze data comprises a plurality of images of an eye of a user interacting the user interface.

24. The computer system of claim 22, wherein the processor is further configured to receive voice data, and the processor is further configured to correlate the at least one of brainwave data and emotion data and the voice data to a modification of the user interface, and wherein the memory is further configured to store the voice data.

25. A system comprising:
a display to display a user interface that includes an object;
a gaze sensor to capture eye gaze data;
a headset comprising a plurality of sensors to capture at least one of brainwave data and emotion data; and
a computing device coupled to the gaze sensor, the headset and the display, wherein the computing device is configured to provide the user interface to the display, determine if the user is viewing the object based on the gaze data, correlate the at least one of brainwave data and emotion data to a command corresponding to the object, and modify the display of the user interface that includes the object based on the command.

26. The system of claim 25, wherein the command comprises a movement of the object.

27. The system of claim 25, wherein the gaze data comprises eye gaze data eye gaze position and at least one of eye position, distance from the gaze sensor to the eye, pupil size, and a timestamp.

28. The system of claim 25, wherein the gaze sensor comprises a video camera and a light source.

29. A method comprising:
displaying a user interface on a display;
receiving gaze data for a user interacting with the user interface;
determining whether the gaze of the user is directed at an object displayed in the user interface based on the gaze data;
receiving at least one of brainwave data and emotion data;
correlating the at least one of brainwave data and emotion data to an intended interaction of the user with the object; and
modifying the display of the object in the user interface based on the correlated interaction.

30. The method of claim 29, wherein the gaze data comprises eye gaze data eye gaze position and at least one of eye position, distance from the gaze sensor to the eye, pupil size, and a timestamp.

31. The method of claim 29, wherein modifying the display of the object comprises moving the relative position of the object in the user interface.

32. The method of claim 29, wherein the object is a character, and wherein modifying the display of the object comprises changing a facial expression of the character.

33. A computer-readable storage media having computer executable instructions stored thereon which cause a computer system to carry out a method when executed, the method comprising:
displaying a user interface on a display;
receiving gaze data for a user interacting with the user interface;
determining whether the gaze of the user is directed at an object displayed in the user interface based on the gaze data;
receiving at least one of brainwave data and emotion data;
correlating the at least one of brainwave data and emotion data to an intended interaction of the user with the object; and
modifying the display of the object in the user interface based on the correlated interaction.

34. The computer-readable storage media of claim 33, wherein modifying the display of the object comprises moving the relative position of the object in the user interface.

35. The computer-readable storage media of claim 33, wherein the object is a character, and wherein modifying the display of the object comprises changing a facial expression of the character.
